# EUROPEAN PATENT SPECIFICATION

(11) **EP 2 293 637 B1**
(45) Date of publication and mention of the grant of the patent: **23.10.2013**
(21) Application number: 10008483.9
(22) Date of filing: 13.08.2010
(51) Int. Cl.: H04W 72/12

(54) **Method and apparatus for performing buffer status reporting**
Verfahren und Vorrichtung zur Durchführung von Berichterstattung des Zwischenspeicherzustands
Procédé et appareil pour réaliser des rapports d'état du tampon

(30) Priority: 02.09.2009 US 239069 P
(43) Date of publication of application: 09.03.2011
(73) Proprietor: Innovative Sonic Corporation, Taipei City 10049 (TW)
(72) Inventor: Tseng, Li-Chih, Peitou Taipei City (TW); Ou, Meng-Hui, Peitou Taipei City (TW); Guo, Yu-Hsuan, Peitou Taipei City (TW)
(74) Representative: Görz, Ingo

(56) References cited:
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.6.0, 1 June 2009 (2009-06-01), pages 1-44, XP050377622,
- ASUSTEK: "Clarification on BSR trigger", 3GPP DRAFT; R2-095622 CLARIFICATION ON BSR TRIGGER (DISCUSSION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390139, [retrieved on 2009-10-06]
- ASUSTEK: "Clarification on BSR trigger", 3GPP DRAFT; R2-095624 CLARIFICATION ON BSR TRIGGER (CR), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390141, [retrieved on 2009-10-06]

## Description

The present invention relates to a method and apparatus for performing buffer status reporting in a user equipment (UE) of a wireless communication system according to the pre-characterizing clauses of claims 1, 7, 8 and 11.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, the 3rd Generation Partnership Project, 3GPP, introduces a Buffer Status Reporting (BSR) procedure, which is used to provide the serving NB (or enhanced NB) with information about the amount of data in UL buffers of the UE. In the BSR procedure, the UE uses a MAC PDU (Protocol Data Unit) to carry a BSR MAC control element with information about the amount of data in the UL buffers to the network. Accordingly, the network can determine the total amount of data available across one or all logical channel groups.

There are three types of BSR for different triggering events, a regular BSR, a periodic BSR and a padding BSR. The regular BSR is triggered when UL data arrives at the UE transmission buffer and the UL data belongs to a logical channel with higher priority than those for which data already existed in the UE transmission buffer, or is triggered when a serving cell change occurs. The periodic BSR is triggered when a periodic BSR timer "PERIODIC_BSR_TIMER" expires. The padding BSR is triggered when UL resources are allocated and an amount of padding bits is equal to or greater than the size of the BSR MAC control element plus its sub-header.

According to the current specification (3GPP TS36.321 V8.6.0), the Buffer Status reporting procedure shall determine that at least one BSR has been triggered since the last transmission of a BSR or if this is the first time that at least one BSR is triggered. After at least one BSR is determined triggered, if the UE has UL resources allocated for a new transmission for a current Transmission Time Interval (TTI), the UE shall generate a BSR MAC control element to report information about the amount of data in the UL buffers. Else, if the UE does not have UL resources allocated for a new transmission for this TTI and the triggered BSR is a Regular BSR, a Scheduling Request (SR) shall be triggered, for requesting the network to allocate an uplink grant for the UE, such that the triggered BSR can be transmitted.

In addition, all triggered BSRs shall be cancelled in the following two cases: (1) when the UL grant can accommodate all pending data available for transmission but is not sufficient to additionally accommodate the BSR MAC control element plus its sub-header; (2) when a BSR is included in a MAC PDU for transmission.

However, in some cases, the above BSR operations may cause a later triggered BSR cannot be transmitted timely, resulting in that higher priority data of the UE may be delayed.

This in mind, the present invention aims at providing a method and apparatus for performing buffer status reporting in a user equipment (UE) of a wireless communication system, so as to prevent a new triggered buffer status report from not being transmitted timely.

This is achieved by a method and apparatus for performing buffer status reporting in a user equipment (UE) of a wireless communication system according to the pre-characterizing clauses of claims 1, 7, 8 and 11. The dependent claims pertain to corresponding further developments and improvements.

As will be seen more clearly from the detailed description following below, the claimed method for performing Buffer Status Reporting (BSR) in a user equipment (UE) of a wireless communication system includes steps of determining any BSR has been triggered since last cancellation of a triggered BSR to a current Transmission Time Interval (TTI); and performing a BSR procedure when at least one BSR is determined triggered; wherein the triggered BSR is cancelled when a first uplink grant received by the UE can only accommodate all pending data available for transmission but is not sufficient to additionally accommodate a first BSR MAC control element corresponding to the triggered BSR plus its sub-header, or when the first BSR MAC control element is included in a first MAC PDU for transmission.

In the following, the invention is further illustrated by way of example, taking reference to the accompanying drawings. Thereof
FIG.1 shows an operational diagram of a conventional BSR procedure.
FIG.2 shows another operational diagram of a conventional BSR procedure.
FIG.3 is a schematic diagram of a wireless communications system.
FIG.4 is a function block diagram of a wireless communications device.
FIG.5 is a diagram of program code of FIG.4.
FIG.6 is a flowchart of a process according to an embodiment of the present invention.
FIG.7 shows an operational diagram of the process in FIG.6.
Fig.8 shows another operational diagram of the process in FIG.6.
FIG.9 is a flowchart of a process according to another embodiment of the present invention.

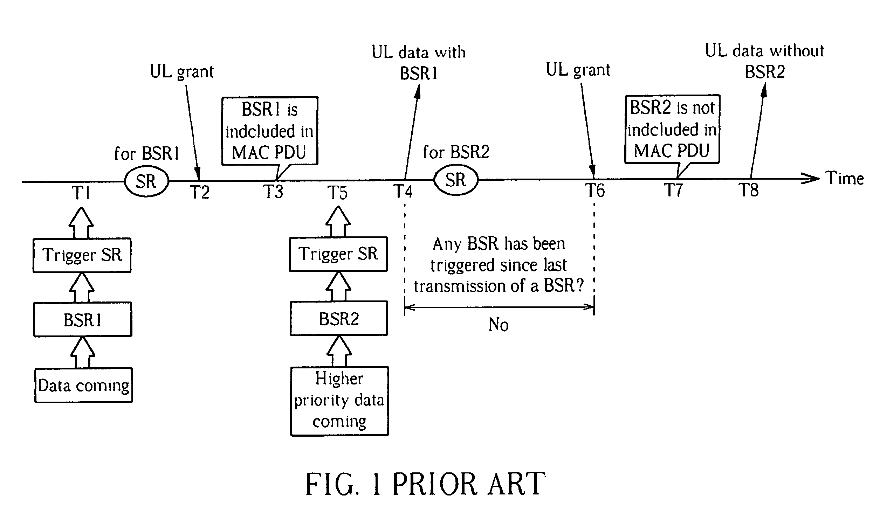

Please refer to FIG.1, which shows an operational diagram of a conventional BSR procedure. At the beginning, the UE triggers a first BSR BSR1 at a timing point T1. Since the UE has no UL resources allocated for a new transmission for this TTI, an SR is then triggered to request the network to allocate an uplink grant for the UE. Then, the allocated UL grant is received on a Physical Downlink Control Channel (PDCCH) at a timing point T2. In this case, the UE generates a BSR MAC control element corresponding to the first BSR BSR1, and includes it into a MAC PDU at a timing point T3. Such that the BSR MAC control element can be transmitted at a timing point T4 along with other uplink data. In general, the time interval between reception of the UL grant and transmission of the first BSR BSR1 is about 4 milliseconds, i.e. T4=T2+4. In addition, since the BSR MAC control element is generated at the timing point T3, all triggered BSRs are cancelled at the same time.

Assuming that the UE triggers a second BSR BSR2 at a timing point T5 before the first BSR BSR1 is sent due to higher priority data coming, since the UL grant is already used by the first BSR BSR I, the UE has to trigger another SR to request UL grants for the second BSR BSR2. However, when the UL grant is received by the UE at a timing point T6, the UE cannot determine whether any BSR has been triggered based on the above method, i.e. no BSR is triggered after the last transmission of a BSR. As a result, the UE shall not generate a BSR MAC control element corresponding to the second BSR BSR2 at a timing point T7.

In this case, the second BSR BSR2 is not included in the MAC PDU using the lately allocated UL grant, such that the higher priority data in the UE UL buffer cannot be sent timely, resulting in data transmission delay of the UE.

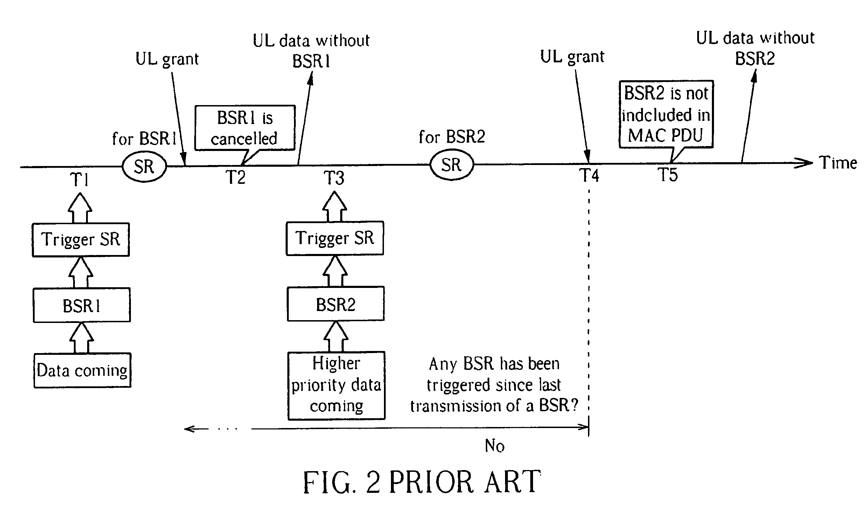

In addition, please refer to FIG.2, which shows another operational diagram of the conventional BSR procedure. At the beginning, the UE triggers a first BSR BSR1 at a timing point T1. Then, the first BSR BSR1 is cancelled at a timing point T2 since the allocated UL grant can only accommodate all pending data available for transmission but is not sufficient to additionally accommodate the BSR MAC control element plus its sub-header. That means the first BSR BSR1 is not included in the uplink transmission. Afterwards, the UE triggers a second BSR BSR2 and an SR due to UL data arrival at a timing point T3. In this case, when an UL grant is received by the UE at a timing point T4, the second BSR BSR2 is supposed to be included in a MAC PDU. However, since the first BSR BSR1 is cancelled, the UE cannot determine whether there is triggered BSR based on the above method.

Assuming that the first BSR BSR1 is the first time a BSR is triggered, since the first BSR BSR1 is cancelled, the UE has no triggered BSRs. The second BSR BSR2 is either not a first-time triggered BSR. Thus, the UE cannot determine whether any BSR has been triggered based on the above-mentioned method. In this case, the UE shall not generate a BSR MAC control element corresponding to the second BSR BSR2, such that the higher priority data in the UE UL buffer cannot be sent timely.

In brief, if the new BSR is triggered before transmission of the old BSR which is triggered earlier than the new BSR, and the UL grant is received later than the transmission of the old BSR, the way to determine whether any BSR has been triggered may cause incorrect execution of the BSR procedure, such as the BSR MAC control element corresponding to the new BSR cannot be generated, and result in occurrence of UE data transmission delay.

It is therefore an objective of the present invention to provide a method and apparatus for performing buffer status reporting in an user equipment of a wireless communication system.

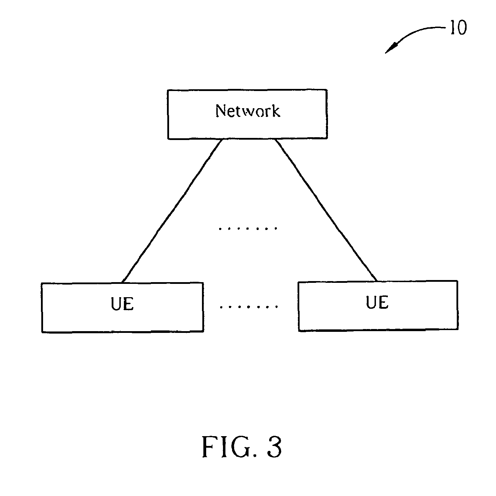

Please refer to FIG.3, which illustrates a schematic diagram of a wireless communications system 10. The wireless communications system 10 is preferred to be a Long Term Evolution (LTE) system, and is briefly composed of a network and a plurality of user equipments (UEs). In FIG. 1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

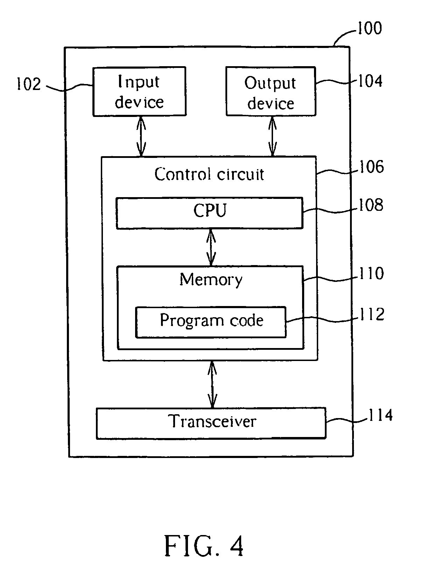

Please refer to FIG4, which is a functional block diagram of a communications device 100 in a wireless communications system. The communications device 100 can be utilized for realizing the UEs or the network in FIG .3. For the sake of brevity, FIG.4 only shows an input device 102, an output device 104, a control circuit 106, a central processing unit (CPU) 108, a memory 110, a program 112, and a transceiver unit 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver unit 114 is used to receive and transmit wireless signals, delivering received signals to the control circuit 106, and outputting signals generated by the control circuit 106 wirelessly. From a perspective of a communications protocol framework, the transceiver unit 114 can be seen as a portion of Layer 1, and the control circuit 106 can be utilized to realize functions of Layer 2 and Layer 3.

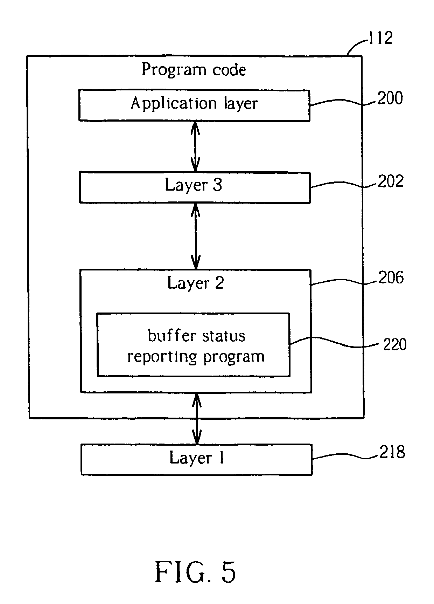

Please continue to refer to FIG.5. FIG.5 is a diagram of the program code 112 shown in FIG.4. The program code 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In the LTE system, the MAC layer in the Layer 2 206 can execute a Buffer Status Reporting (BSR) procedure, which uses a MAC Protocol Data Unit (PDU) to carry a BSR MAC control element with information about the amount of data in the UE UL buffers to the network. Accordingly, the network can determine the total amount of data available across one or all logical channel groups. In this case, the embodiment of the present invention provides a buffer status reporting program 220 for correctly handling all triggered BSRs in the UE, so as to avoid occurrence of data transmission delay.

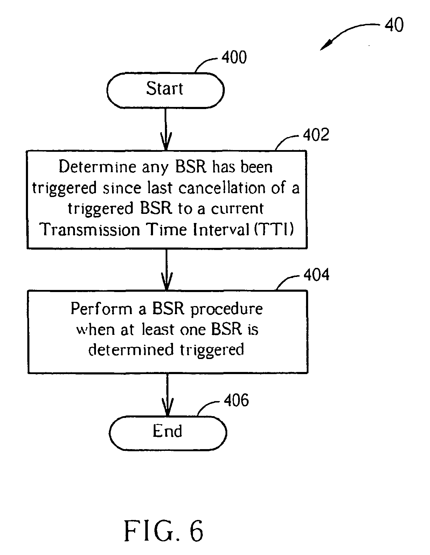

Please refer to FIG.6, which illustrates a schematic diagram of a process 40. The process 40 is utilized for Buffer Status Reporting (BSR) in an user equipment (UE) of the wireless communications system 10, and can be compiled into the buffer status reporting program 220. The process 40 includes the following steps:
Step 400: Start.
Step 402: Determine any BSR has been triggered since last cancellation of a triggered BSR to a current Transmission Time Interval (TTI).
Step 404: Perform a BSR procedure when at least one BSR is determined triggered.
Step 406: End.

According to the process 40, the UE first determine any BSR has been triggered since last cancellation of a triggered BSR to the current TTI. When at least one BSR is determined triggered, the UE then performs the BSR procedure. That is to say, if the UE has an uplink grant allocated for a new transmission for the current TTI, a BSR MAC control element corresponding to the at least one BSR is generated. Otherwise, if the UE does not have an uplink grant allocated for a new transmission for the current TTI and the at least one BSR is a Regular BSR, the UE shall trigger a Scheduling Request (SR).

In addition, all triggered BSRs shall be cancelled in the following two cases: (1) when the UL grant can accommodate all pending data available for transmission but is not sufficient to additionally accommodate the BSR MAC control element plus its sub-header; (2) when the BSR MAC control element is included in a MAC PDU for transmission.

Therefore, in the embodiment of the present invention, the time interval for determining any BSRs has been triggered is between the last cancellation of a BSR and the current TTI. Compared to the prior art that the determination begins at the last transmission of BSR, the embodiment of the present invention advances the start timing of the determination to the last cancellation of BSR. As a result, the new BSR can be transmitted timely.

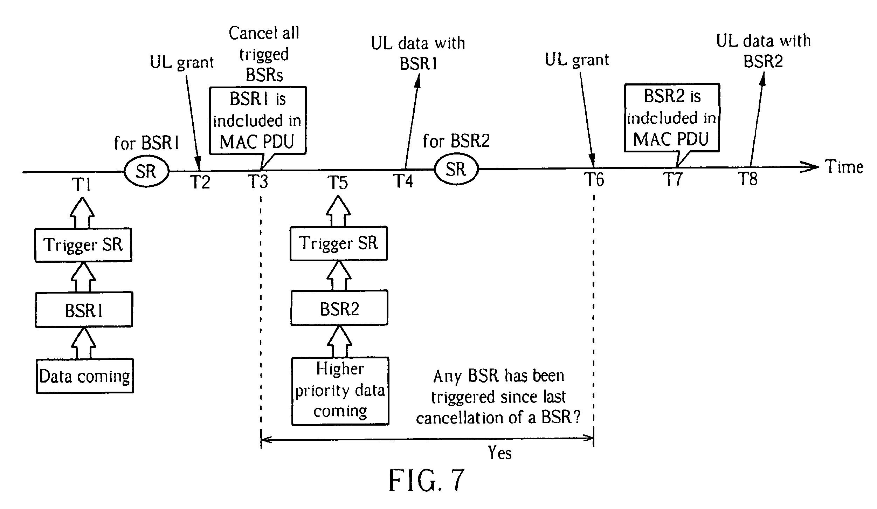

For example, please refer to FIG.7, which shows an operational diagram of the process 40. The scenario in Fig.7 is similar to that in Fig.1, and thus the same descriptions are not given herein. Assume that the UE triggers a second BSR BSR2 at a timing point T5 before a first BSR BSR1 is sent due to higher priority data coming. Since the timing of determining any BSRs has been triggered is advanced to the last cancellation of a BSR (i.e. when the first BSR BSR1 is included in the MAC PDU), the UE can then successfully determine that there is new triggered BSR at the TTI the UL grant is received (i.e. at a timing point T6), and generate a BSR MAC control element corresponding to the second BSR BSR2 at a timing point T7. As a result, the second BSR BSR2 can be transmitted at a timing point T8 along with the other uplink data.

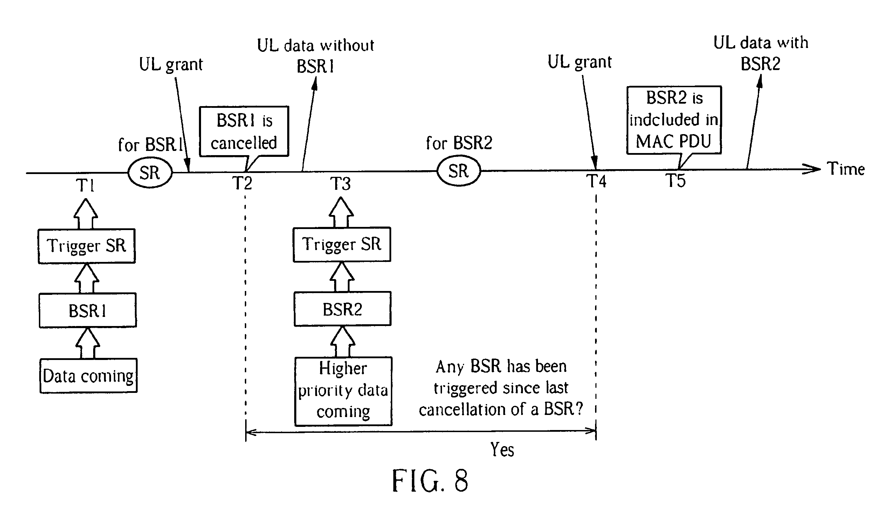

Similarly, the problem in Fig.2 can also be solved by the process 40. Please refer to Fig.8, which shows another operational diagram of the process 40. The scenario in Fig.8 is similar to that in Fig.2, and thus the same descriptions are not given herein. As shown in Fig.8, since the timing of determining any BSRs has been triggered is advanced to the last cancellation of a BSR, i.e. the timing point T2 that the first BSR BSR1 is cancelled, the UE can then successfully determine that there is new triggered BSR at the TTI the UL grant is received (i.e. at a timing point T4), and generate a BSR MAC control element corresponding to the second BSR BSR2 at a timing point T5.

Please note that the above determination method is not for the scenario that the new BSR is the first-time triggered BSR. If the new BSR is the first-time triggered BSR, the UE shall directly perform the BSR procedure, i.e. generating a BSR MAC control element or triggering a SR according to whether the UE has an uplink grant at this TTI.

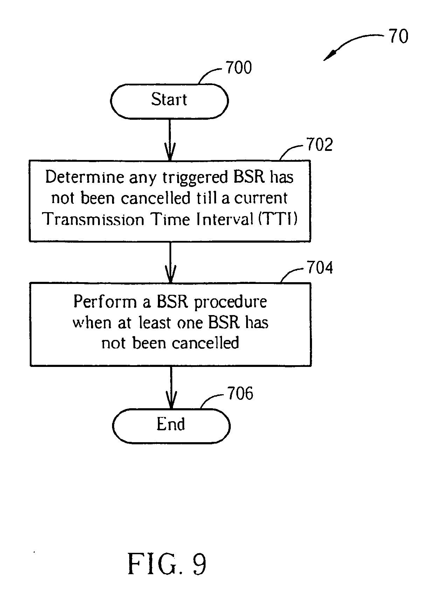

In addition, the invention can be realized in like manners as long as the BSRs triggered after the last BSR cancellation can be determined. For example, please refer to FIG.9, which illustrates a schematic diagram of a process 70. The process 70 is also utilized for Buffer Status Reporting (BSR) in an user equipment (UE) of the wireless communications system 10, and can be compiled into the buffer status reporting program 220. The process 70 includes the following steps:
Step 700: Start.
Step 702: Determine any triggered BSR has not been cancelled till a current Transmission Time Interval (TTI).
Step 704: Perform a BSR procedure when at least one BSR has not been cancelled.
Step 706: End.

According to the process 70, the UE first determine any triggered BSR has not been cancelled till the current TTI. If at least one BSR is triggered and has not been cancelled, the UE shall perform the BSR procedure, i.e. generating a BSR MAC control element or triggering a SR according to whether the UE has an uplink grant at this TTI. Compared to the process 40, this embodiment does not need to separately consider the first-time triggered BSR. If the UE has triggered BSRs that has not been cancelled before the current TTI, the UE shall perform the BSR procedure in any case.

In brief, the process 70 also advances the timing of determining any BSR has been triggered to the last BSR cancellation, to solve the problem that the new triggered BSR cannot be transmitted timely.

As mentioned above, the embodiment of the present invention provides a method and apparatus for performing buffer status reporting, for correctly handling all triggered BSRs in the UE, so as to avoid occurrence of UE data transmission delay.

## Claims

1. A method for performing Buffer Status Reporting, named BSR hereinafter, in a user equipment, named UE hereinafter, of a wireless communication system,
**characterized by** the method comprising:
determining any BSR has been triggered since last cancellation of a triggered BSR to a current Transmission Time Interval, named TTI hereinafter (402); and
performing a BSR procedure when at least one BSR is determined triggered (404);
wherein the triggered BSR is cancelled when a first uplink grant received by the UE can only accommodate all pending data available for transmission but is not sufficient to additionally accommodate a first BSR Medium Access Control, named MAC hereinafter, control element corresponding to the triggered BSR plus its sub-header, or when the first BSR MAC control element is included in a first MAC Protocol Data Unit, named PDU hereinafter, for transmission.

2. The method of claim 1, **characterized in that** the BSR procedure comprises:
generating a second BSR MAC control element corresponding to the at least one BSR when the UE has a second uplink grant allocated for a new transmission for the current TTI.

3. The method of claim 2, **characterized in that** the at least one BSR is cancelled when the second BSR MAC control element is included in a second MAC PDU for transmission

4. The method of claim 2, **characterized in that** the at least one BSR is cancelled when the second uplink grant can accommodate all pending data available for transmission but is not sufficient to additionally accommodate the second BSR MAC control element plus its sub-header.

5. The method of claim 1, **characterized in that** the BSR procedure comprises:
triggering a Scheduling Request, named SR hereinafter, when the UE does not have a second uplink grant allocated for a new transmission for the current TTI and the at least one BSR is a Regular BSR.

6. The method of claim 1 further comprising:
determining whether this is the first time the at least one BSR is triggered when no BSR has been cancelled before; and
performing the BSR procedure when this is the first time the at least one BSR is triggered.

7. A communication device (100) for performing Buffer Status Reporting, named BSR hereinafter, in a user equipment, named UE hereinafter, of a wireless communication system, the communication device (100) comprising:
a processor (108) for executing a program code (112); and
a memory (110) coupled to the processor (108) for storing the program code (112); **characterized in that** the processor, when executing the program code (112), is adapted to carry out the method steps as defined in any one of the preceding claims 1 to 6.

8. A method for performing Buffer Status Reporting, named BSR hereinafter, in a user equipment, named UE hereinafter, of a wireless communication system, **characterized by** the method comprising:
determining any triggered BSR has not been cancelled till a current Transmission Time Interval, name TTI hereinafter (702); and
performing a BSR procedure when at least one BSR has not been cancelled (704);
wherein the triggered BSR is cancelled when a uplink grant received by the UE can only accommodate all pending data available for transmission but is not sufficient to additionally accommodate a BSR Medium Access Control, named MAC hereinafter, control element corresponding to the triggered BSR plus its sub-header, or when the BSR MAC control element is included in a MAC Protocol Data Unit, named PDU hereinafter, for transmission.

9. The method of claim 8, **characterized in that** the BSR procedure comprises:
generating a BSR MAC control element corresponding to the at least one BSR when the UE has a uplink grant allocated for a new transmission for the current TTI.

10. The method of claim 8, **characterized in that** the BSR procedure comprises:
triggering a Scheduling Request, named SR hereinafter, when the UE does not have a uplink grant allocated for a new transmission for the current TTI and the at least one BSR is a Regular BSR.

11. A communication device (100) for performing Buffer Status Reporting, named BSR hereinafter, in a user equipment, named UE hereinafter, of a wireless communication system, the communication device (100) comprising:
a processor (108) for executing a program code (112); and
a memory (110) coupled to the processor (108) for storing the program code (112); **characterized in that** the processor, when executing the program code (112), is adapted to carry out the method steps as defined in any one of the preceding claims 8 to 10.

## Patentansprüche

1. Verfahren zum Durchführen einer Pufferstatusmeldung, auch "Buffer Status Reporting", im Folgenden BSR genannt, in einem Anwenderendgerät, im Folgenden UE genannt, eines Drahtloskommunikationssystems,
**dadurch gekennzeichnet, dass** das Verfahren umfasst:
Bestimmen, ob eine BSR seit einem letzten Abbruch einer ausgelösten BSR für ein laufendes Sendezeit-Intervall, auch "Transmission Time Interval" genannt, im Folgenden TTI (402) genannt, ausgelöst worden ist; und
Durchführen einer BSR-Prozedur, wenn mindestens eine BSR als ausgelöst festgestellt worden ist (404);
wobei die ausgelöste BSR abgebrochen wird, wenn ein erster von dem UE empfangener Uplink Grant nur alle für das Senden verfügbaren bevorstehende Daten unterbringen kann, jedoch nicht ausreichend ist, um zusätzlich ein erstes BSR Medium Access Control, im Folgenden MAC genannt, Kontrollelement unterzubringen, welches sich auf die ausgelöste BSR bezieht und zusätzlich dessen Sub-Header unterzubringen, oder wenn das erste BSR MAC Kontrollelement zum Senden in einer ersten MAC Protokolldateneinheit, im Folgenden PDU genannt, enthalten ist.

2. Verfahren nach Anspruch 1, **dadurch gekennzeichnet, dass** die BSR-Prozedur umfasst:
Erzeugen eines zweiten BSR MAC Kontrollelementes, welches sich auf die mindestens eine BSR bezieht, wenn das UE einen zweiten für eine neue Sendung im aktuellen TTI angeordneten Uplink Grant hat.

3. Verfahren nach Anspruch 2, **dadurch gekennzeichnet, dass** die mindestens eine BSR abgebrochen wird, wenn das zweite BSR MAC Kontrollelement zur Sendung in einer zweiten MAC PDU enthalten ist.

4. Verfahren nach Anspruch 2, **dadurch gekennzeichnet, dass** die mindestens eine BSR abgebrochen wird, wenn der zweite Uplink Grant alle zum Senden verfügbaren bevorstehenden Daten unterbringen kann, jedoch nicht ausreichend ist, zusätzlich das zweite BSR MAC Kontrollelement und zusätzlich dessen Sub-Header unterzubringen.

5. Verfahren nach Anspruch 1, **dadurch gekennzeichnet, dass** die BSR-Prozedur umfasst:
Auslösen einer Planungsanfrage, auch "Scheduling Request", im Folgenden SR genannt, wenn das UE keinen zweiten für eine neue Sendung in dem aktuellen TTI vorgesehenen Uplink Grant hat und die mindestens eine BSR eine reguläre BSR ist.

6. Verfahren nach Anspruch 1 weiter umfassend:
Bestimmen, ob dies das erste Mal ist, dass die mindestens eine BSR ausgelöst wird, wenn zuvor keine BSR abgebrochen worden ist; und
Durchführen der BSR-Prozedur, wenn dies das erste Mal ist, dass die mindestens eine BSR ausgelöst wird.

7. Kommunikationsgerät (100) zum Durchführen von Pufferstatusmeldungen, auch "Buffer Status Reporting" genannt, im Folgenden BSR genannt, in einem Anwenderendgerät, im Folgenden UE genannt, eines Drahtloskommunikationssystems, wobei das Kommunikationsgerät (100) umfasst:
einen Prozessor (108) zum Ausführen eines Programmcodes (112); und
einen mit dem Prozessor (108) gekoppelten Speicher (110) zum Speichern des Programmcodes (112); **dadurch gekennzeichnet, dass** der Prozessor eingerichtet ist, die in einem der vorstehenden Ansprüche 1 bis 6 definierten Verfahrensschritte durchzuführen, wenn er den Programmcode (112) ausführt.

8. Verfahren zum Durchführen einer Pufferstatusmeldung, auch "Buffer Status Reporting" genannt, im Folgenden BSR genannt, in einem Anwenderendgerät, im Folgenden UE genannt, eines Drahtloskommunikationssystems,
**dadurch gekennzeichnet, dass** das Verfahren umfasst:
Feststellen, dass eine ausgelöste BSR bis zu einem aktuellen Übertragungszeitintervall, im Folgenden TTI genannt (702), nicht abgebrochen worden ist; und
Durchführen einer BSR-Prozedur, wenn mindestens eine BSR nicht abgebrochen worden ist (704);
wobei die ausgelöste BSR abgebrochen wird, wenn ein von dem UE empfangener Uplink Grant nur alle für ein Senden verfügbaren bevorstehenden Daten unterbringen kann, jedoch nicht ausreichend ist, zusätzlich ein BSR Medium Access Control, im Folgenden MAC genannt, Kontrollelement unterzubringen, welches sich auf die ausgelöste BSR bezieht und zusätzlich dessen Sub-Header unterzubringen, oder wenn das BSR MAC Kontrollelement zum Senden in einer MAC Protokolldateneinheit, im Folgenden PDU genannt, enthalten ist.

9. Verfahren nach Anspruch 8, **dadurch gekennzeichnet, dass** die BSR-Prozedur umfasst:
Erzeugen eines sich auf die mindestens eine BSR beziehenden BSR MAC Kontrollelementes, wenn das UE einen für eine neue Sendung in dem aktuellen TTI vorgesehenen Uplink Grant hat.

10. Verfahren nach Anspruch 8, **dadurch gekennzeichnet, dass** die BSR-Prozedur umfasst:
Auslösen einer Planungsanfrage, im Folgenden SR genannt, wenn das UE in dem aktuellen TTI keinen für eine neue Sendung vorgesehenen Uplink Grant hat und die mindestens eine BSR eine reguläre BSR ist.

11. Kommunikationsgerät (100) zum Durchführen von Pufferstatusmeldungen, auch "Buffer Status Reporting" genannt, im Folgenden BSR genannt, in einem Anwenderendgerät, im Folgenden UE genannt, eines Drahtloskommunikationssystems, wobei das Kommunikationsgerät (100) umfasst:
einen Prozessor (108) zum Ausführen eines Programmcodes (112); und einen mit dem Prozessor (108) gekoppelten Speicher (110) zum Speichern des Programmcodes (112); **dadurch gekennzeichnet, dass** der Prozessor eingerichtet ist, die in einem der vorstehenden Ansprüche 8 bis 10 definierten Verfahrensschritte durchzuführen, wenn er den Programmcode (112) ausführt.

## Revendications

1. Procédé de réalisation d'un rapport d'état de la mémoire tampon, dénommé ci-après BSR, dans un équipement utilisateur, dénommé ci-après EU, d'un système de communication sans fil, **caractérisé en ce que** le procédé comprend :
le fait de déterminer si un BSR quelconque a été déclenché depuis la dernière annulation d'un BSR déclenché à un intervalle de temps de transmission, dénommé ci-après TTI (402), actuel ; et
la réalisation d'une procédure de BSR lorsqu'au moins un BSR est déterminé comme déclenché (404) ;
dans lequel le BSR déclenché est annulé lorsqu'une première autorisation de liaison montante reçue par l'EU ne peut contenir que toutes les données en attente disponibles pour la transmission mais n'est pas suffisante pour contenir en outre un premier contrôle d'accès au support de BSR, dénommé ci-après MAC, un élément de contrôle correspondant au BSR déclenché plus son sous-en-tête, ou lorsque le premier élément de contrôle de MAC de BSR est inclus dans une première unité de données de protocole MAC, dénommée ci-après PDU, pour la transmission.

2. Procédé selon la revendication 1, **caractérisé en ce que** la procédure de BSR comprend :
la génération d'un second élément de contrôle de MAC de BSR correspondant au au moins un BSR lorsque l'EU a une seconde autorisation de liaison montante allouée pour une nouvelle transmission pour le TTI actuel.

3. Procédé selon la revendication 2, **caractérisé en ce que** le au moins un BSR est annulé lorsque le second élément de contrôle de MAC de BSR est inclus dans une seconde PDU de MAC pour la transmission.

4. Procédé selon la revendication 2, **caractérisé en ce que** le au moins un BSR est annulé lorsque la seconde autorisation de liaison montante peut contenir toutes les données en attente disponibles pour la transmission mais n'est pas suffisante pour contenir en outre le second élément de contrôle de MAC de BSR plus son sous-en-tête.

5. Procédé selon la revendication 1, **caractérisé en ce que** la procédure de BSR comprend :
le déclenchement d'une demande d'ordonnancement, dénommée ci-après SR, lorsque l'EU a une seconde autorisation de liaison montante allouée pour une nouvelle transmission pour le TTI actuel et le au moins un BSR est un BSR normal.

6. Procédé selon la revendication 1, comprenant en outre :
le fait de déterminer s'il s'agit de la première fois que le au moins un BSR est déclenché lorsqu'aucun BSR n'a été annulé auparavant ; et
la réalisation de la procédure de BSR lorsque c'est la première fois que le au moins un BSR est déclenché.

7. Dispositif de communication (100) pour réaliser un rapport d'état de la mémoire tampon, dénommé ci-après BSR, dans un équipement utilisateur, dénommé ci-après EU, d'un système de communication sans fil, le dispositif de communication (100) comprenant :
un processeur (108) pour exécuter un code de programme (112) ; et
une mémoire (110) couplée au processeur (108) pour stocker le code de programme (112) ; **caractérisé en ce que** le processeur, lors de l'exécution du code de programme (112), est adapté pour réaliser les étapes de procédé telles que définies dans l'une quelconque des revendications précédentes 1 à 6.

8. Procédé de réalisation d'un rapport d'état de la mémoire tampon, dénommé ci-après BSR, dans un équipement utilisateur, dénommé ci-après EU, d'un système de communication sans fil, **caractérisé en ce que** le procédé comprend :
le fait de déterminer qu'un BSR déclenché quelconque n'a pas été annulé jusqu'à un intervalle de temps de transmission, dénommé ci-après TTI (702), actuel ; et
réaliser une procédure de BSR lorsqu'au moins un BSR n'a pas été annulé (704) ;
dans lequel le BSR déclenché est annulé lorsqu'une autorisation de liaison montante reçue par l'EU ne peut contenir que toutes les données en attente disponibles pour la transmission mais n'est pas suffisante pour contenir en outre un contrôle d'accès au support de BSR, dénommé ci-après MAC, un élément de contrôle correspondant au BSR déclenché plus son sous-en-tête, ou lorsque l'élément de contrôle de MAC de BSR est inclus dans une unité de données de protocole MAC, dénommée ci-après PDU, pour la transmission.

9. Procédé selon la revendication 8, **caractérisé en ce que** la procédure de BSR comprend :
la génération d'un élément de contrôle de MAC de BSR correspondant au au moins un BSR lorsque l'EU a une autorisation de liaison montante allouée pour une nouvelle transmission pour le TTI actuel.

10. Procédé selon la revendication 8, **caractérisé en ce que** la procédure de BSR comprend :
le déclenchement d'une demande d'ordonnancement, dénommée ci-après SR, lorsque l'EU ne s'est pas vu allouer une autorisation de liaison montante pour une nouvelle transmission pour le TTI actuel et le au moins un BSR est un BSR normal.

11. Dispositif de communication (100) pour réaliser un rapport d'état de la mémoire tampon, dénommé ci-après BSR, dans un équipement utilisateur, dénommé ci-après EU, d'un système de communication sans fil, le dispositif de communication (100) comprenant :
un processeur (108) pour exécuter un code de programme (112) ; et
une mémoire (110) couplée au processeur (108) pour stocker le code de programme (112) ; **caractérisé en ce que** le processeur, lors de l'exécution du code de programme (112), est adapté pour réaliser les étapes de procédé telles que définies dans l'une quelconque des revendications précédentes 8 à 10.
